# FASCICULE DE BREVET EUROPEEN

(11) **EP 0 912 645 B1**
(45) Date de publication et mention de la délivrance du brevet: **15.12.1999**
(21) Numéro de dépôt: 97932869.7
(22) Date de dépôt: 09.07.1997
(51) Int. Cl.: C09J 7/02, F16B 47/00

(54) **ADHESIF DOUBLE FACE DEMONTABLE**
WIEDERABLÖSBARES DOPPELSEITIGES KLEBEBAND
RELEASABLE DOUBLE-SIDED ADHESIVE DEVICE

(30) Priorité: 17.07.1996 FR 9608953
(43) Date de publication de la demande: 06.05.1999
(73) Titulaire: PLASTO S.A., 21300 Chenôve (FR)
(72) Inventeur: DEVELAY, Nicolas, F-21410 Sainte Marie/Ouche (FR); PERRIN, Christophe, F-21240 Talant (FR); BERNARD, Pascale, F-21000 Dijon (FR)
(74) Mandataire: Levy, David
(86) Numéro de dépôt international: FR9701246
(87) Numéro de publication internationale: WO9803601

(56) Documents cités:
- WO-A-92/11333
- WO-A-94/21157
- US-A- 5 409 189

## Description

La présente invention concerne un dispositif adhésif double face susceptible d'être enlevé par étirage de l'adhésif au moyen d'une languette.

### Domaine de l'invention

L'invention propose une solution technique appartenant au domaine de la fixation temporaire ou non d'objets, entre eux ou sur un support, au moyen d'un élément adhésif sur ses deux faces, ladite fixation étant réversible, c'est-à-dire qu'il est possible de séparer les objets assemblés sans les endommager. Ce domaine d'application est différent de celui des colles qui est utilisé, de préférence, lorsqu'on souhaite obtenir un assemblage définitif et non réversible.

### Art antérieur

Pour assembler définitivement des objets entre eux tout en conservant leur intégrité, au lieu de vis, clous ou agrafes, on utilise de plus en plus des adhésifs. Lorsque l'on désire à la fois assembler des objets entre eux ou sur un support tout en se laissant la possibilité de démonter l'assemblage quand celui-ci ne sera plus nécessaire, les solutions techniques deviennent assez limitées ; on utilise généralement des pâtes adhésives qui permettent de fixer provisoirement des affiches, ou des objets légers.

On connaît également des rubans adhésifs double face, symétriques ou asymétriques et dont le support peut être un simple film ou une feuille d'un composé alvéolaire. Il existe également des films de masse adhésive étirable qui perdent leur pouvoir adhésif lorsqu'on les étire parallèlement au plan de joint.

Ces différentes solutions présentent cependant des inconvénients : les pâtes adhésives ne permettent que des fixations d'objets légers et résistent mal aux contraintes de cisaillement. Leur emploi est généralement limité à la fixation d'affiches ou de cartons informatifs ou décoratifs. Les adhésifs double face ont souvent un pouvoir adhésif limité, ou, inversement sont d'un démontage difficile si l'adhésif est puissant, nécessitant souvent l'utilisation d'une lame coupante pour séparer les objets, ces derniers restant ensuite recouverts d'adhésif.

Les rubans adhésifs étirables avec support sont connus essentiellement des documents FR-2 355 895, EP-563 272. Les films de masse adhésive étirable sont décrits par exemple dans les documents DE-3 331 016 et EP-578 979. Ces films adhésifs double face nécessitent des surfaces planes pour procurer un assemblage solide.

Dans EP-578 979, il est préconisé de prévoir à une extrémité du ruban, une couche de protection opaque aux rayons ultraviolets pour éviter l'apparition de déchirures quand on tire sur le ruban en vue de la séparation entre le support et l'objet qui y était fixé. Suivant une autre caractéristique, l'extrémité du ruban protégée contre les U.V. sert également de languette de traction.

Différentes manières de réaliser la languette de préhension sont envisagées. On peut, soit recouvrir le ruban adhésif d'une pellicule de résine synthétique opaque aux U.V., soit rendre la masse adhésive du ruban inerte dans la zone de préhension par une impression opaque aux U.V., soit encore utiliser du papier. Dans tous les cas, la fabrication de tels rubans nécessitent des opérations spécifiques pour rendre opaque la zone de préhension servant de languette de traction sauf lorsqu'on utilise du papier. Dans cette dernière version, et après une fixation prolongée de l'objet sur son support, une traction un peu trop forte entraîne la rupture du papier lorsque ce dernier dépasse à une extrémité du ruban adhésif. Lorsque la languette, quelle que soit sa structure, ne dépasse pas du ruban adhésif, elle constitue alors une partie du ruban adhésif qui n'est plus, en conséquence, utilisée en tant que surface adhésive, et qu'il est nécessaire de maintenir accessible pour permettre la préhension. De toutes les façons, lorsqu'on utilise ce type de ruban adhésif comme un simple double face, on obtient une fixation très difficilement démontable ou séparable.

### Objet de l'invention

La présente invention a pour but de remédier aux inconvénients précités et de proposer un nouveau dispositif de fixation temporaire dans lequel la totalité du film adhésif étirable peut se trouver derrière l'objet fixé.

La présente invention a pour objet un dispositif adhésif sensible à la pression démontable, comprenant au moins un organe de traction solidaire d'une bande de masse adhésive fortement cohésive et élastique, dont le pouvoir adhésif est réduit par étirage dans le plan du joint caractérisé en ce que l'organe de traction est une bande non adhésive située dans le prolongement de la bande adhésive et noyée en partie dans une zone d'une extrémité de ladite bande adhésive.

Un avantage de la présente invention réside dans le fait que l'organe de traction étant distinct de la bande adhésive tout en étant lié intimement à cette dernière, on peut utiliser toute la surface adhésive de ladite bande tout en laissant accessible l'organe de traction au moment de la séparation de l'objet à fixer du support.

Un autre avantage de la présente invention est que l'organe de traction qui est de préférence un film mince peut présenter des longueurs adaptées aux objets à fixer et réduire ainsi la bande adhésive en fonction des applications, de manière à diminuer le prix du dispositif de fixation.

Selon une autre caractéristique de l'invention, le dispositif de fixation est constitué par un empilage de bandes adhésives avec interposition de protecteurs pelables et munies chacune d'une languette de préhension et de traction.

D'autres avantages et caractéristiques ressortiront mieux à la lecture de plusieurs modes de réalisation de la présente invention, ainsi que des dessins annexés sur lesquels :
- la figure 1 est une vue en perspective d'un dispositif de fixation selon un premier mode de réalisation,
- la figure 2 est une vue en élévation schématique d'un deuxième mode de réalisation du dispositif de fixation selon l'invention,
- la figure 3 est une représentation schématique d'un objet fixé sur un support à l'aide du dispositif représenté sur les figures 1 ou 2,
- la figure 4 est une représentation schématique d'un empilage de dispositifs de fixation selon l'invention.

### Description détaillée

Selon l'invention, le dispositif se compose de :
a) un film de masse adhésive fortement cohésive qui a la propriété de réduire fortement son pouvoir adhésif lorsque l'on applique une traction parallèlement au plan du joint ou plan de fixation sur un support,
b) un film de matière non adhésive, très peu extensible, intimement lié au film de masse adhésive, et qui sert de moyen de préhension pour provoquer l'étirage nécessaire au décollement dudit film de masse adhésive,
c) des moyens pour supprimer le pouvoir adhésif des parties de chacune des faces du film de masse adhésive en regard de la partie constituant la liaison interne entre le film non adhésif et le film de masse adhésive,
d) éventuellement des protecteurs enlevables pour couvrir temporairement les faces du film adhésif.

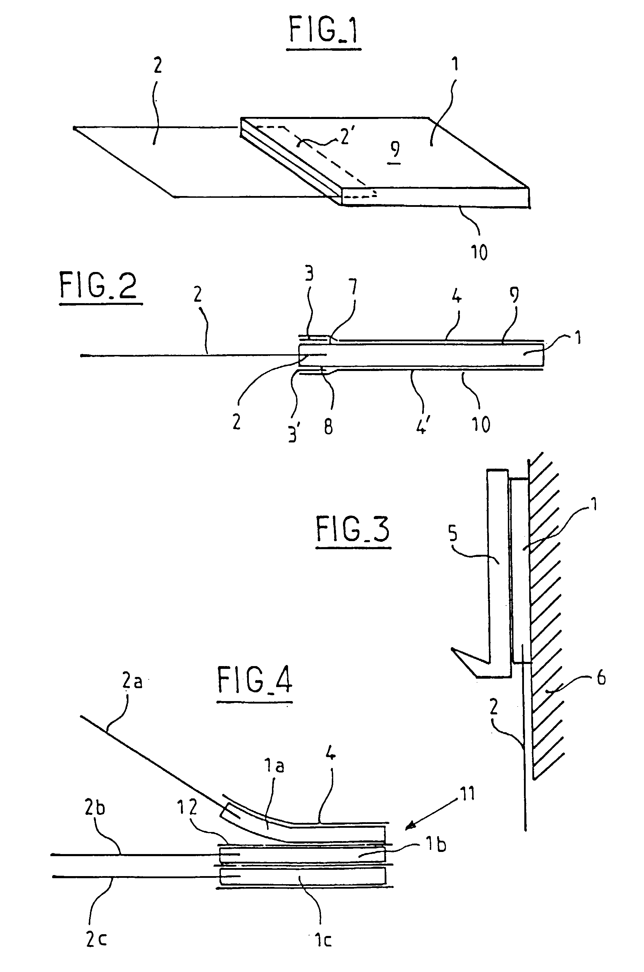

Le dispositif adhésif selon l'invention (figure 1) comprend une bande 1 de masse adhésive étirable fortement et au moins une languette de préhension et de traction 2, cohésive, non adhésive et très peu extensible. La languette de préhension 2 est insérée, en partie, dans l'épaisseur de la bande 1 et à une extrémité de cette dernière, sur une zone 2' de dimensions prédéterminées de sorte qu'on obtient une liaison très forte entre la bande 1 et la languette 2, ce qui permet d'exercer, éventuellement, de fortes tractions sur la languette 2 sans craindre ni un déchirement ni une séparation entre la bande 1 et la languette 2.

La figure 2 représente, en profil, un mode de réalisation préféré de l'invention, tel qu'obtenu sous une forme pratique. En se référant à cette figure, la bande de masse adhésive 1 est intimement liée à la languette 2 qui est constituée par un film 2 par le moyen d'une partie 2' du film 2 qui est incluse dans la masse 1. Les parties 7 et 8 des deux faces 9 et 10 de la bande de masse adhésive 1 qui sont en regard de la partie 2' du film 2 sont rendues non adhésives par le moyen d'un autre film, d'un enduit ou d'un vernis non adhésif 3 et 3'. Les faces 9, 10 de la bande de masse adhésive 1 sont chacune revêtues d'un protecteur temporaire 4 et 4' que l'utilisateur retire au moment de l'emploi.

Le dispositif adhésif selon l'invention trouve son application dans l'assemblage des objets entre eux ou sur un support et permet d'obtenir une fixation à la fois solide et démontable. Lors de la fixation, il est nécessaire de laisser une partie de la bande 2 accessible afin de pouvoir la tirer et ainsi provoquer le décollement de la partie adhésive au moment où l'on souhaite séparer l'assemblage. En choisissant un film 2 en matière transparente, la partie qui doit obligatoirement rester accessible est pratiquement invisible.

La figure 3 représente un exemple d'utilisation dans lequel on a fixé un objet 5 sur un mur 6 au moyen de la bande 1, le film 2 restant accessible alors que toute la bande de matière adhésive se trouve derrière l'objet.

Pour réaliser un dispositif adhésif selon l'invention, on utilise une masse adhésive sensible à la pression à cohésion élevée. La bande de masse adhésive convenant à cette réalisation doit en effet posséder des caractéristiques telles que la force de rupture soit sensiblement supérieure à la force de décollement. Parmi les masses adhésives convenant à cette application, on préfère des masses adhésives sensibles à la pression de type hot-melt extrudables, formulées à l'aide d'élastomères de synthèse de type tribloc et de résines tackifiantes.

Parmi les élastomères de synthèse, on choisit de préférence des élastomères de type Styrène-Isoprène-Styrène qui procurent une bonne élasticité et une bonne cohésion. Parmi les résines tackifiantes, on préfère des résines de colophane ou des résines aliphatiques ou aromatiques hydrogénées. Ces constituants sont, de façon habituelle, formulés avec d'autres constituants éventuels tels que des plastifiants, des antioxydants, des agents protecteurs du rayonnement ultraviolet, des charges, des colorants, des agents odorants, des agents d'amertume... La bande de masse adhésive est obtenue par extrusion à chaud, sous une épaisseur comprise entre 0,5 et 3 mm.

La languette de traction ou film 2 est constituée d'une bande de matière résistante, très peu extensible et de faible épaisseur. Selon un mode préféré, on utilise un film de polyester qui présente des caractéristiques avantageuses pour réaliser l'invention : excellente résistance mécanique, non extensible, bonne adhérence avec la masse adhésive, transparence. L'épaisseur d'un tel film est d'environ 6 à 50 µm, de préférence 12 à 25 µm. On peut également utiliser d'autres composants tels qu'un tissu fin ou un film en matériau de synthèse renforcé à l'aide d'une trame non extensible. De préférence, on utilise un film du type MELINEX commercialisé par ICI.

La languette de traction doit être intimement liée à la masse adhésive, cette liaison étant indispensable au bon fonctionnement du dispositif. De façon pratique, on crée cette liaison en complexant deux films de masse adhésive sur une partie du film servant de languette ou en intégrant dans la masse adhésive, au moment de l'extrusion, une partie de la languette, et ainsi obtenir une liaison telle que représentée sur la figure 1.

Pour obtenir une bonne résistance de la liaison, la longueur de la partie 2' est d'environ 3 à 10 mm, de préférence 4 à 5 mm.

Par ailleurs, dans le but de faciliter le glissement au moment de la traction de la languette, il est préférable de rendre la zone de liaison non adhérente sur les deux faces de la masse adhésive, comme représenté par les repères 3 et 3' sur la figure 2. Ces zones peuvent être rendues non adhérentes par tout moyen connu comme par exemple en déposant un film fin en matériau de synthèse, un papier, un vernis acrylique, une couche de silicone ou encore un matériau pulvérulent tel que du talc. Parmi les solutions techniques possibles, on préfère déposer un film très fin en polyester ou enduire une couche de silicones photoréticulables par un procédé de type flexographie.

Enfin, pour protéger les faces adhésives de la bande de masse, on place sur chacune des faces 9, 10 un film protecteur enlevable 4, 4', d'un type connu, tel que par exemple, un papier, un film en polyester, un film en polyéthylène, tous ces protecteurs étant traités pour être rendus anti-adhérents sur au moins une face. Dans un exemple de réalisation, on utilise un film polyester siliconé sur une face, d'épaisseur 23 µm, commercialisé par la société SILICONATURE, sous la référence RP0023M81A.

Si l'on souhaite une présentation de ces dispositifs adhésifs sous forme d'une pile 11, on sépare chaque élément 1a, 1b, 1c, par un protecteur 12 dont les deux faces sont traitées pour être rendues anti-adhérentes différemment. Chaque élément ou dispositif adhésif peut ainsi être retiré de la pile en laissant le protecteur sur l'élément suivant de la pile, tel que représenté sur la figure 4.

De façon pratique, les dispositifs sont présentés sous forme de pastilles carrées ou rectangulaires dont les dimensions peuvent être différentes en fonction de l'utilisation envisagée. Ainsi pour des applications dans le domaine de la vie courante ou du bricolage, le dispositif pourra avoir une largeur d'environ 20 à 30 mm, une longueur adhésive d'environ 20 à 50 mm et une languette de traction de longueur 30 à 50 mm.

L'exemple de réalisation suivant permet de mieux apprécier l'invention.

La masse adhésive est préparée au départ de 37,86 parts d'élastomère tribloc SIS (commercialisé sous la marque VECTOR 4211D par la société EXXON), 9,46 parts de plastifiant à base d'huile de paraffine (commercialisé sous la référence CATENEX N956 par la société SHELL), 47,6 parts de résine de colophane (commercialisé sous la référence DERTOLINE SP2 par la société DRT), 1,52 parts d'antioxydants, 0,51 parts d'agent anti-U.V., 2,27 parts d'oxyde de titane, 1,01 part d'un agent d'amertume et 0,05 part de colorant.

Le mélange est malaxé à chaud à une température d'environ 160 à 180°C et extrudé au moyen d'une buse plate de façon à obtenir deux rubans de 0,5 mm d'épaisseur et 30 mm de largeur.

Les deux rubans sont ensuite réunis en emprisonnant sur un côté une largeur de 5 mm d'un film polyester d'épaisseur 23 µm et de largeur totale 30 mm. On obtient à ce stade un ruban continu dont la section est représentée par la figure 1. On dépose ensuite une bande d'un film de polyester de 6 µm d'épaisseur sur le bord de chacune des faces du complexe, sur la zone de liaison masse-film. La largeur du film déposé est de 6 mm et déborde légèrement (environ 1 mm) au-dessus du film polyester. On place enfin sur chacune des faces de la masse un protecteur en film polyester siliconé sur la face en regard de la masse adhésive. On obtient à ce stade une bande dont la section est représentée à la figure 2. Cette bande est ensuite découpée pour obtenir les dispositifs selon l'invention dont la largeur est d'environ 20 mm et l'épaisseur est d'environ 1 mm.

Selon les essais effectués, un tel élément adhésif peut fixer un objet d'environ 1 kg sur une paroi verticale, les surfaces de l'objet et de la paroi devant être planes et constituées d'un matériau non-anti-adhérent.

Cet exemple est décrit pour illustrer l'invention : il est possible de modifier par exemple la formulation de la masse adhésive, la nature du film, la languette, la nature des anti-adhérents et des protecteurs sans sortir du cadre de l'invention.

Les dimensions des dispositifs peuvent être également modifiées pour s'adapter à différents besoins, à condition toutefois de conserver une épaisseur suffisante de la bande de masse adhésive pour que la résistance à la rupture de ladite bande reste sensiblement supérieure à la force nécessaire au décollement sur tout type de support.

Les dispositifs auto-adhésifs démontables tels que décrits ci-dessus trouvent leur application dans le domaine du bricolage, des travaux ménagers ou de l'industrie, chaque fois qu'il est nécessaire d'obtenir une fixation provisoire d'un objet sur un support et que l'on souhaite ne pas laisser de traces ni de perforations. Ainsi pour fixer un objet, comme par exemple un distributeur de papier, sur un mur on colle sur l'objet un ou plusieurs dispositifs selon l'invention, après avoir retiré l'un des protecteurs 4, en prenant soin de positionner les languettes de traction de façon à ce qu'elles restent accessibles après la fixation, puis on place l'ensemble sur le mur, après avoir retiré le second protecteur 4'. L'objet est alors fixé sans que la partie adhésive soit visible et seule la languette de traction en matière transparente reste apparente. Si l'on souhaite retirer l'objet de son support, il suffit de tirer doucement sur la languette 2 qui reste accessible ; la présence des anti-adhérents 3 et 3' permet à la zone de liaison de glisser et d'étirer la masse 1 qui se décolle en s'allongeant jusqu'à suppression totale de la fixation. Le caractère fortement cohésif de la masse est tel qu'il ne reste aucune trace d'adhésif ni sur l'objet, ni sur le support.

## Revendications

1. Dispositif adhésif sensible à la pression démontable, comprenant au moins un organe de traction solidaire d'une bande de masse adhésive fortement cohésive et élastique (1), dont le pouvoir adhésif est réduit par étirage dans le plan du joint caractérisé en ce que l'organe de traction est une bande non adhésive (2) située dans le prolongement de la bande adhésive (1) et noyée en partie dans une zone d'une extrémité de ladite bande adhésive.

2. Dispositif selon la revendication 1, caractérisé en ce que la bande non adhésive est un film de polyester transparent.

3. Dispositif selon la revendication 1, caractérisé en ce que la zone de liaison de la bande adhésive avec la bande non adhésive est recouverte sur les deux faces libres d'un agent anti-adhérent (3,3').

4. Dispositif selon la revendication 3, caractérisé en ce que l'agent anti-adhérent est un film fin en polyester.

5. Dispositif selon la revendication 3, caractérisé en ce que l'agent anti-adhérent est un vernis anti-adhérent.

6. Dispositif selon l'une quelconque des revendications 1 à 5, caractérisé en ce que les faces adhésives de la bande sont recouvertes d'un film protecteur enlevable (4, 4').

7. Dispositif selon l'une quelconque des revendications 1 à 5, caractérisé en ce qu'il est constitué par un empilage de bandes adhésives (1a, 1b, 1c) séparées par des protecteurs enlevables à pouvoir anti-adhérent différencié et munies chacune d'un organe de traction.

8. Utilisation d'un dispositif selon l'une des revendications 1 à 7, pour fixer temporairement un objet sur un support, le dispositif étant dans sa totalité derrière l'objet.

## Patentansprüche

1. Wiederablösbare druckempfindliche Klebevorrichtung mit mindestens einem Zugorgan, das mit einem Band (1) aus einer stark kohäsiven und elastischen Klebemasse fest verbunden ist, deren Haftvermögen durch Recken in der Verbindungsebene vermindert wird, dadurch gekennzeichnet, daß das Zugorgan ein nichtklebendes Band (2) ist, daß in der Verlängerung des Klebebands (1) angeordnet ist und partiell in einen Bereich eines Endes des Klebebandes eingebettet ist.

2. Vorrichtung nach Anspruch 1, dadurch gekennzeichnet, daß das nichtklebende Band eine transparente Polyesterfolie ist.

3. Vorrichtung nach Anspruch 1, dadurch gekennzeichnet, daß der Bereich der Verbindung des Klebebandes mit dem nichtklebenden Band auf den beiden freien Flächen mit einem Antiklebemittel (3, 3') bedeckt ist.

4. Vorrichtung nach Anspruch 3, dadurch gekennzeichnet, daß das Antiklebemittel eine dünne Polyesterfolie ist.

5. Vorrichtung nach Anspruch 3, dadurch gekennzeichnet, daß das Antiklebemittel ein Antiklebelack ist.

6. Vorrichtung nach einem der Ansprüche 1 bis 5, dadurch gekennzeichnet, daß die klebenden Seiten des Bandes mit einer abziehbaren Schutzfolie (4, 4') bedeckt sind.

7. Vorrichtung nach einem der Ansprüche 1 bis 5, dadurch gekennzeichnet, daß sie aus einem Stapel von Klebebändern (1a, 1b, 1c) besteht, die durch abziehbare Schutzelemente mit differenziertem Antihaftvermögen voneinander getrennt sind und jeweils mit einem Zugorgan versehen sind.

8. Verwendung einer Vorrichtung nach einem der Ansprüche 1 bis 7 zur vorübergehenden Befestigung eines Objekts auf einem Träger, wobei sich die Vorrichtung vollständig hinter dem Objekt befindet.

## Claims

1. Releasable pressure-sensitive adhesive device comprising at least one pulling member secured to a strip of highly cohesive and resilient adhesive compound (1), the adhesive strength of which is reduced by pulling in the attachment plane, characterized in that the pulling member is a non-adhesive strip (2) extending away from the adhesive strip (1) and partially embedded in an end portion of the said adhesive strip.

2. Device according to Claim 1, characterized in that the non-adhesive strip is a transparent polyester film.

3. Device according to Claim 1, characterized in that the portion for bonding the adhesive strip to the non-adhesive strip is covered on both free faces with a non-stick agent (3, 3').

4. Device according to Claim 3, characterized in that the non-stick agent is a thin polyester film.

5. Device according to Claim 3, characterized in that the non-stick agent is a non-stick varnish.

6. Device according to any one of Claims 1 to 5, characterized in that the adhesive faces of the strip are covered with a removable protective film (4, 4').

7. Device according to any one of Claims 1 to 5, characterized in that it consists of a stack of adhesive strips (1a, 1b, 1c) separated by removable protectors whose sides differ in their non-stickability, each strip being provided with a pulling member.

8. Use of a device according to one of Claims 1 to 7 for temporarily fastening an object to a support, the device in its entirety being behind the object.
